# EUROPÄISCHE PATENTSCHRIFT

(11) **EP 1 515 819 B1**
(45) Veröffentlichungstag und Bekanntmachung des Hinweises auf die Patenterteilung: **25.04.2007**
(21) Anmeldenummer: 03739839.3
(22) Anmeldetag: 16.06.2003
(51) Int. Cl.: B23B 27/04

(54) **SCHNEIDEINSATZ MIT ZWEI GEGENÜBERLIEGENDEN SCHNEIDKÖPFEN**
CUTTING INSERT HAVING TWO OPPOSITE CUTTING HEADS
PLAQUETTE DE COUPE PRESENTANT DEUX TETES DE COUPE OPPOSEES

(30) Priorität: 21.06.2002 AT 40002 U
(43) Veröffentlichungstag der Anmeldung: 23.03.2005
(73) Patentinhaber: CERATIZIT Austria Gesellschaft m.b.H., 6600 Reutte /Tirol (AT)
(72) Erfinder: MAIER, Johann, A-6600 Pflach (AT); RONACHER, Herbert, A-6600 Wängle (AT)
(86) Internationale Anmeldenummer: PCT/AT2003/000168
(87) Internationale Veröffentlichungsnummer: WO 2004/000492

(56) Entgegenhaltungen:
- EP-A- 0 767 023
- EP-A- 1 083 015
- DE-A- 2 730 459
- US-A- 5 725 334

## Beschreibung

Die Erfindung betrifft einen Schneideinsatz mit zwei in Bezug auf seine Längsachse A gegenüberliegenden Schneidköpfen, welche durch einen in Richtung der Längsachse A nach innen abgesetzten Mittelteil miteinander verbunden sind so dass der Mittelteil schmäler ist als die Schneidköpfe und wobei jeder Schneidkopf eine im wesentlichen quer zur Längsachse A verlaufende, stirnseitige Schneidkante und zwei im wesentlichen in Richtung der Längsachse A des Schneideinsatzes verlaufende seitliche Schneidkantenabschnitte aufweist, wobei die zugehörigen Freiflächen der Schneidkanten mit einer Ebene Pᵣ durch den höchsten Punkt der Schneidkanten parallel zur Längsachse A einen Winkel α₁ von weniger als 90° einschließen.

Derartige Schneideinsätze werden in der Regel zum Stechen vielfach in Kombination mit Längsdreh- und/oder Plandrehbearbeitungen verwendet. Sie sind aber auch zum Fräsen beim Einsatz in Scheibenfräsern geeignet.

Um derartige Schneideinsätze problemlos verwenden zu können, müssen die seitlichen Schneidkanten während des Zerspanungsvorganges einen bestimmten Winkel mit den zu bearbeitenden Werkstückoberflächen einschließen, um nicht über die gesamte Schneidenlänge gleichzeitig in Schneideingriff zu kommen, was durch eine entsprechende geometrische Ausgestaltung des Schneideinsatzes erreicht wird. Dieser Winkel, den die seitlichen Schneidkanten mit der Werkstückoberfläche einschließen liegt der Praxis im Bereich von 0,5° - 4°. Üblicherweise sind bei bekannten derartigen Schneideinsätzen die seitlichen Schneidkanten parallel zur Längsachse des Schneideinsatzes angeordnet.

Schneideinsätze der genannten Art sind beispielsweise in der DE 295 03 246 U1 oder in der DE 195 23 129 A1 beschrieben. Um den für die Zerspanung notwendigen Freiwinkel zu erreichen, schließen die an die stirnseitigen und an die seitlichen Schneidkanten anschließenden Freiflächen mit einer Ebene parallel zur Grundfläche des Schneideinsatzes jeweils einen Winkel von weniger als 90° ein. In vielen Fällen, insbesondere bei Schneideinsätzen für die Bearbeitung von Aluminium und ähnlichen Werkstoffen, müssen diese Freiflächen nach dem Pressen und Sintern des Schneideinsatzes geschliffen werden, um möglichst scharfkantige Schneidkanten und/oder enge Toleranzen am Schneideinsatz und Werkstück zu erreichen. Da die seitlichen Schneidkanten bzw. Schneidkantenabschnitte zum problemlosen Schneideinsatz den notwendigen Winkel mit einer Parallelen zur Längsachse A des Schneideinsatzes einschließen müssen und gleichzeitig die an die Schneidkanten angrenzenden Freiflächen mit der Ebene parallel zur Grundfläche jeweils einen Winkel von weniger als 90° einschließen, liegen die zwei seitlichen Freiflächen der gegenüberliegenden Schneidköpfe die auf derselben Seite des Schneideinsatzes angeordnet sind, nicht auf einer gemeinsamen, sondern auf zwei unterschiedlichen Ebenen und müssen daher in zwei Arbeitsgängen getrennt voneinander geschliffen werden. Dies ist relativ zeitaufwändig und erfordert aufwändige Schleifeinrichtungen.

Die DE 27 30 459 A1 sowie die EP A 1 083 015 beschreiben ebenfalls Schneideinsätze mit zwei gegenüberliegenden Schneidköpfen. Bei diesen Schneideinsätzen ist aber der die beiden Schneidköpfe verbindende Mittelteil nicht nach innen zu abgesetzt, sondern gleichlaufend mit den Schneidköpfen. Dadurch liegen die seitlichen Freiflächen jeweils auf derselben Seite der beiden gegenüberliegenden Schneidköpfe zwangsläufig auf einer gemeinsamen Ebene.

Die EP-B-767 023 beschreibt einen Schneideinsatz mit zwei gegenüberliegenden Schneidköpfen die über einen nach innen abgesetzten Mittelteil mit einander verbunden sind. Dieser Schneideinsatz weist jedoch keine kreisförmige stirnseitige Schneidkante auf und die seitlichen Schneidkantenabschnitte verlaufen von der stirnseitigen Scheidkante weg-nicht abfallend sondern parallel zur Grundfläche.

Damit wird mit einem derartigen Schneideinsatz nicht der für eine problemlose Zerspanung notwendige seitliche Freiwinkel erreicht.

Die Aufgabe der vorliegenden Erfindung ist es daher, einen Schneideinsatz der eingangs genannten Art zu schaffen, der auf einfacheren Schleifeinrichtungen kostengünstiger zu schleifen ist und der gleichzeitig den für die Zerspannung not wendigen seitlichen Freiwinkel aufweist.

Erfindungsgemäß wird dies durch einem Schneideinsatz gemäß Anspruch 1 gelöst.

Dadurch, dass die seitlichen Schneidkanten in Bezug auf die Ebene Pᵣ von der stirnseitigen Schneikante weg abfallend verlaufen, wird im Zusammenhang mit dem Freiwinkel ihrer Freiflächen ein Winkel dieser seitlichen Schneidkanten gegen die Wandung des Werkstücks parallel zur Längsachse A des Schneideinsatzes bei der Zerspanung auch dann erreicht, wenn die zugehörigen Freiflächen der gegenüberliegenden Schneidköpfe, welche auf derselben Seite des Schneideinsatzes angeordnet sind, jeweils auf einer gemeinsamen Ebene E liegen. Führt man den Schneideinsatz dementsprechend aus, wird erreicht, dass bei einem notwendigen Schleifvorgang die beiden, auf derselben Seite des Schneideinsatzes liegenden Freiflächen der seitlichen Schneidkanten der gegenüberliegenden Schneidköpfe gleichzeitig in einem einzigen Arbeitsgang, ohne Veränderung der Position des Schneideinsatzes, geschliffen werden können. Auf diese Weise wird der Schleifvorgang und die zur Durchführung des Schleifirorganges notwendige Bearbeitungseinrichtung wesentlich vereinfacht und damit kostengünstiger.

Die seitlichen Schneidkantenabschnitte, die annähernd parallel zur Längsachse A verlaufen, sind von den stirnseitigen Schneidkanten weg so abfallend ausgeführt dass ihre zugehörigen Freiflächen bei den gegenüberliegenden Schneidköpfen auf derselben Seite des Schneideinsatzes, jeweils auf einer gemeinsamen Ebene E des Schneideinsatzes liegen.
Besonders vorteilhaft für die Aluminiumzerspanung sind die Schneideinsätze dann ausgeführt, wenn der Winkel α₁ im Bereich von 75°-83° liegt und wenn die seitlichen Schneidkantenabschnitte bzw. die Tangenten im mittleren Bereich der seitlichen Schneidkanten mit der Ebene Pᵣ einen Winkel α₂ im Bereich von 15°-25° einschließen.

Im Folgenden wird die Erfindung anhand von Zeichnungen näher erläutert. Es zeigen:
- Figur 1: einen erfindungsgemäßen Schneideinsatz in Seitenansicht
- Figur 2: den Schneideinsatz nach Fig. 1 in Stirnansicht
- Figur 3: den Schneideinsatz nach Fig. 1 im Schnitt x-x
- Figur 4: den Schneideinsatz nach Fig. 1 in Draufsicht
- Figur 5: den Schneideinsatz nach Fig. 1 in der durch Pfeil angedeuteten Blickrichtung.

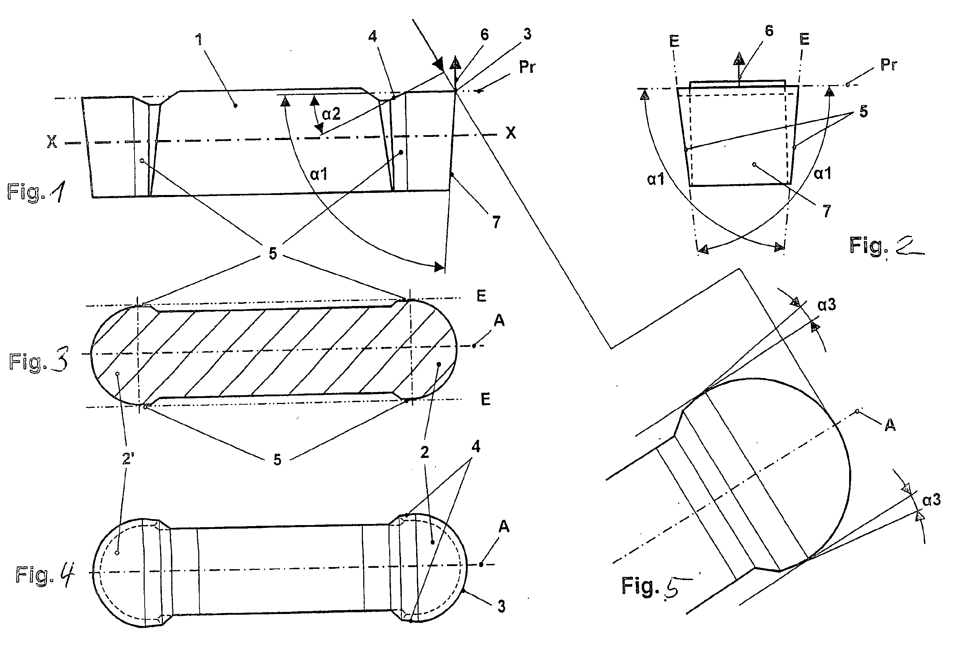

In den Figuren 1 bis 5 ist ein erfindungsgemäßer Schneideinsatz -1- mit zwei gegenüberliegenden Schneidköpfen mit jeweils einer kreisförmigen, stirnseitigen Schneidkante -3- und zwei geraden, seitlichen Schneidkantenabschnitten -4- dargestellt. Die beiden in Bezug auf die Längsachse A des Schneideinsatzes -1-gegenüberliegenden Schneidköpfe -2-, -2'- sind exakt symmetrisch ausgeführt.
Die jeweiligen stirnseitigen Schneidkanten -3- verlaufen im wesentlichen senkrecht zur Längsachse A. Anschließend an die stirnseitige Schneidkante -3- verläuft die Freifläche -7- und anschließend an die seitlichen Schneidkantenabschnitte -4- die Freiflächen -5-, die mit einer Ebene Pᵣ durch den höchsten Punkt der Schneidkanten -3-, -4- parallel zur Längsachse A jeweils einen Winkel α₁ von 83° einschließen. Die seitlichen Schneidkantenabschnitte -4- sind von der stirnseitigen Schneidkante -3- weg in Bezug auf die Ebene Pᵣ gerade abfallend ausgeführt und schließen mit der Ebene Pᵣ jeweils einen Winkel α₂ von 25° ein. Wie aus den Figuren 2 und 3 zu ersehen ist, liegen die Freiflächen -5- der gegenüberliegenden Schneidköpfe -2-, -2'-, die jeweils auf derselben Seite des Schneideinsatzes -1- liegen, auf einer gemeinsamen Ebene E. Daher ist es möglich zur Herstellung geschliffener, seitlicher Schneidkantenabschnitte -4- beide Freiflächen -5- auf einer Seite des Schneideinsatzes -1- jeweils durchgehend in einem Arbeitsgang ohne Positionsänderung des Schneideinsatzes -1- zu schleifen. Dadurch ist es möglich, einfachere Schleifeinrichtungen zu verwenden und die Herstellungskosten des Schneideinsatzes zu senken. Trotzdem diese Freiflächen -5- auf einer gemeinsamen Ebene E liegen, ergibt sich aufgrund des in Bezug auf die stirnseitige Schneidkante -3- abfallenden Verlaufes der seitlichen Schneidkantenabschnitte -4- im Zusammenhang mit der Neigung der Freiflächen -5- in Bezug auf die Ebene Pᵣ, dass die seitlichen Schneidkantenabschnitte -4- bei der Zerspanung z.B. während eines Stechvorganges entlang ihres Verlaufes einen Winkel α₃ mit der Seitenwandung der bearbeiteten Werkstückoberfläche einschließen und damit Freigehen. Dies ist in der Figur 5 dargestellt.

## Patentansprüche

1. Schneideinsatz (1) mit zwei in Bezug auf seine Längsachse A gegenüberliegenden Schneidköpfen (2,2'), welche durch einen in Richtung der Längsachse A nach innen abgesetzten Mittelteil miteinander verbunden sind so dass der Mittelteil schmäler ist als die Schneidköpfe und wobei jeder Schneidkopf (2,2') eine im wesentlichen quer zur Längsachse A verlaufende, stirnseitige Schneidkante (3) und zwei im wesentlichen in Richtung der Längsachse A des Schneideinsatzes (1) verlaufende seitliche Schneidkantenabschnitte (4) aufweist, wobei die zugehörigen Freiflächen (7,5) der Schneidkanten (3,4) mit einer Ebene Pᵣ durch den höchsten Punkt der Schneidkanten (3,4) parallel zur Längsachse A einen Winkel α₁ von weniger als 90° einschließen, wobei die Freiflächen (5) der seitlichen Schneidkantenabschnitte (4) der beiden gegenüberliegenden Schneidköpfe (2,2'), welche auf derselben Seite des Schneideinsatzes (1) angeordnet sind, jeweils auf einer gemeinsamen Ebene E liegen
**dadurch gekennzeichnet,**
**dass** die Schneidkante kreisförmig ist und
**dass** die seitlichen Schneidkanten (4) in Bezug auf die Ebene Pᵣ von der stirnseitigen Schneidkante (3) weg unter einem Winkel α₂ im Bereich von 5°-25° abfallend verlaufen.

2. Schneideinsatz, insbesondere für die Aluminiumzerspanung nach Anspruch 1, **dadurch gekennzeichnet, dass** der Winkel α₁ im Bereich von 75°-83° und der Winkel α₂ im Bereich von 15°-25° liegt.

## Claims

1. Cutting insert (1) having two cutting heads (2, 2') which lie opposite one another in relation to its longitudinal axis A and which are connected together by a centre part which is offset inwards in the direction of the longitudinal axis A, so that the centre part is narrower than the cutting heads, and wherein each cutting head (2, 2') comprises an end-face cutting edge (3) which extends substantially transversely to the longitudinal axis A and two lateral cutting edge portions (4) which extend substantially in the direction of the longitudinal axis A of the cutting insert (1), wherein the associated flanks (7, 5) of the cutting edges (3, 4) form an angle α₁ of less than 90° with a plane Pᵣ through the highest point of the cutting edges (3, 4) parallel to the longitudinal axis A, wherein the flanks (5) of the lateral cutting edge portions (4) of the two opposite cutting heads (2, 2'), which are disposed on the same side of the cutting insert (1), in each case lie in a common plane E,
**characterised in**
**that** the end-face cutting edge is circular, and that the lateral cutting edges (4) extend away from the end-face cutting edge (3) in a downward sloping manner at an angle α₂ in the range of 5° to 25° in relation to the plane Pᵣ.

2. Cutting insert, in particular for aluminium cutting, according to Claim 1, **characterised in that** the angle α₁ lies in the range of 75°-83° and the angle α₂ in the range of 15°-25°.

## Revendications

1. Plaquette de coupe (1) comportant deux têtes de coupe (2, 2') opposées par rapport à son axe longitudinal A qui sont connectées entre elles par un élément médian décalé vers l'intérieur en direction de l'axe longitudinal A d'une manière telle que l'élément médian est plus étroit que les têtes de coupe, et dans laquelle chaque tête de coupe (2, 2') comporte une arête de coupe (3) frontale, de tracé sensiblement transversal à l'axe longitudinal A et deux segments latéraux (4) d'arêtes de coupe de tracé sensiblement parallèle à la direction de l'axe longitudinal A de la plaquette de coupe (1), dans laquelle les surfaces libres associées (7, 5) des arêtes de coupe (3, 4) incluent un angle α₁ inférieur à 90° avec un plan Pᵣ parallèle à l'axe longitudinal A qui passe par le point le plus haut des arêtes de coupe (3, 4), et dans laquelle les surfaces libres (5) des segments latéraux (4) d'arêtes de coupe des deux têtes de coupe opposées (2, 2'), qui sont disposées sur le même côté de la plaquette de coupe (1), sont respectivement sur un plan commun E, **caractérisée en ce que** l'arête de coupe est circulaire et **en ce que** les arêtes de coupe latérales (4) sont inclinées l'une vers l'autre dans une direction de rétrécissement par rapport au plan Pᵣ, en partant de l'arête de coupe frontale (3), en formant un angle α₂ dans la plage de 5° à 25°.

2. Plaquette de coupe, en particulier pour l'enlèvement de copeaux d'aluminium selon la revendication 1, **caractérisée en ce que** l'angle α₁ se situe dans la plage de 75° à 83° et l'angle α₂ dans la plage de 15° à 25°.
